# NEUE EUROPÄISCHE PATENTSCHRIFT

(11) **EP 2 733 680 B2**
(45) Veröffentlichungstag und Bekanntmachung des Hinweises auf die Entscheidung über den Einspruch: **19.02.2020**
(45) Hinweis auf die Patenterteilung: 25.05.2016
(21) Anmeldenummer: 13184487.0
(22) Anmeldetag: 16.09.2013
(51) Int. Cl.: G07C 5/08, B60D 1/62

(54) **Verfahren zum Betreiben einer selbstfahrenden Erntemaschine**
Method for operating a self-propelled harvester
Procédé de fonctionnement d'une moissonneuse autotractée

(30) Priorität: 16.11.2012 DE 102012111029
(43) Veröffentlichungstag der Anmeldung: 21.05.2014
(73) Patentinhaber: CLAAS Selbstfahrende Erntemaschinen GmbH, 33428 Harsewinkel (DE)
(72) Erfinder: Bürmann, Dominik, 33415 Verl (DE); Kohlhase, Dr., Martin, 33428 Harsewinkel (DE); Beschorn, Udo, 33428 Harsewinkel (DE)
(74) Vertreter: CLAAS Gruppe

(56) Entgegenhaltungen:
- EP-A1- 2 018 981
- DE-A1-102009 033 450
- DE-A1-102011 007 914
- US-A- 5 359 522
- US-A1- 2010 211 582
- International Standard ISO 11783

## Beschreibung

Die vorliegende Erfindung betrifft ein Verfahren zum Betreiben einer landwirtschaftlichen Arbeitsmaschine gemäß dem Oberbegriff des Anspruches 1 sowie eine landwirtschaftliche Arbeitsmaschine gemäß dem Oberbegriff des Anspruches 7.

Aus der EP 2 018 981 A1 ist ein als an einen Schlepper anbaubares Anbaugerät wie ladewagen, Pflug oder Heuwerbungsmaschine sowie ein Verfahren zur Steuerung des Anbaugerätes bekannt. Das Anbaugerät weist ein elektronisches Typenschild in Form eines RFID-Transponders auf, welches mittels eines am Schlepper angeordneten Lese-/Schreibgerätes auslesbar ist, um das Anbaugerät und dessen Konfiguration zu identifizieren.

Aus der EP 1 378 863 A1 ist es bekannt, den Betrieb und den Zustand eines Vorsatzgerätes, welches an einer Erntemaschine anschließbar ist, zu dokumentieren. Hierzu wird durch eine Betriebsparametererfassungseinrichtung ein Betriebsparametersignal generiert, welches Informationen über den Betrieb des Vorsatzgerätes enthält. Das Betriebsparametersignal wird einer Speichereinrichtung zugeführt, die eine Betriebsdokumentationsinformation abspeichert, die aus dem Betriebsparametersignal abgeleitet wird oder diesem entspricht. Die Speichereinrichtung ist an dem Vorsatzgerät angeordnet und wird durch eine Leseeinrichtung ausgelesen. Die ausgelesenen Betriebsparametersignale werden über ein Bussystem an ein Bordcomputersystem übertragen. Als Betriebsparameter werden Betriebsstunden, die bearbeitete Fläche, die mechanische Belastung am Antriebsstrang, die Betriebsgeschwindigkeit, der Durchsatz, die Art des Ernteguts und Umgebungseigenschaften, wie Temperatur, Niederschlag oder eine Information über den Einsatzort, der mittels eines satellitengestützten Positionserfassungssystems erfasst wird, in der Speichereinrichtung hinterlegt.

In der Regel kommen unterschiedliche Anbau- oder Vorsatzgeräte an landwirtschaftlichen Arbeitsmaschinen zur Anwendung, die beispielsweise in Abhängigkeit von unterschiedlichen Bearbeitungsschritten oder dem abzuerntenden Erntegut ausgetauscht werden. Der Austausch beispielsweise eines Vorsatzgerätes kann mitunter auch innerhalb eines Arbeitstages bei einem Fruchtartwechsel notwendig werden, was mit einem hohen zeitlichen Aufwand durch die Erfassung und Einstellung der Arbeitsparameter des jeweils angeschlossenen Vorsatzgerätes an einer Steuerungsvorrichtung der Arbeitsmaschine verbunden ist. So ist für die Verwendbarkeit verschiedener Funktionen eines Vorsatzgerätes nach dessen Wechsel eine Kalibrierung erforderlich. Beispielhaft seien hier die Funktionen Haspelhöhensteuerung oder die Höhensteuerung eines Schneidwerkes beim Bodenkopieren genannt, welche das Kalibrieren der für die Steuerung notwendigen Sensoren voraussetzen. Zudem kann es zu Fehleinstellungen der vorsatzgeräteabhängigen Funktionen durch die Bedienperson kommen, wodurch ein optimaler Betrieb des Vorsatzgerätes nicht gewährleistet ist. Die gemäß der EP 1 378 863 A1 in der Speichereinrichtung vorgesehene Hinterlegung von Informationen ist nicht geeignet, einen Bediener der selbstfahrenden Arbeitsmaschine von einer Kalibrierung und einer erneuten Einstellung der Arbeits- oder Betriebsparameter des Anbau- oder Vorsatzgerätes nach einem Gerätewechsel zu entlasten.

Der vorliegenden Erfindung liegt somit die Aufgabe zu Grunde, ein Verfahren zum Betreiben einer selbstfahrenden Arbeitsmaschine sowie eine selbstfahrende Arbeitsmaschine zur Durchführung des Verfahrens bereitzustellen, wodurch Auf- oder Umrüstzeiten bei einem Anbau oder Wechsel des Anbau- oder Vorsatzgerätes reduzierbar sind.

Diese Aufgabe wird erfindungsgemäß durch die kennzeichnenden Merkmale des Anspruches 1 sowie des unabhängigen Anspruches 7 gelöst.

Gemäß dem Anspruch 1 wird vorgeschlagen, dass bei einem Anschließen des Anbau- oder Vorsatzgerätes an die Arbeitsmaschine über ein Bussystem ein Datenaustausch zwischen einer Steuereinheit des Anbau- oder Vorsatzgerätes und der Steuerungsvorrichtung der Arbeitsmaschine initiiert wird, und dass von der Steuereinheit anhand der von der Steuerungsvorrichtung empfangenen Daten geprüft wird, ob die Steuerungsvorrichtung durch die Steuereinheit automatisch konfigurierbar ist. Das Ergebnis der Prüfung der Daten liefert eine Aussage darüber, ob für ein angeschlossenes Anbau- oder Vorsatzgerät die Steuerungsvorrichtung der Arbeitsmaschine automatisch konfigurierbar ist oder manuell von einer Bedienperson konfiguriert werden muss, um den Betrieb des Anbau- oder Vorsatzgerätes aufnehmen zu können. Wird festgestellt, dass die Steuerungsvorrichtung automatisch konfigurierbar ist, kann durch die Durchführung der automatischen Konfiguration die Auf- oder Umrüstzeiten bei einem Wechsel des Anbau- oder Vorsatzgerätes deutlich reduziert werden. Gerätespezifische Parameter werden automatisch eingestellt, ebenso wie hinterlegte Sollwerte. Fehleinstellungen und Fehlbedienungen lassen sich auf diese Weise reduzieren. Wird hingegen eine Inkompatibilität festgestellt, wird die Bedienperson über diesen Umstand in Kenntnis gesetzt, um eine manuelle Konfiguration der Steuerungsvorrichtung zur Inbetriebnahme des Anbau- oder Vorsatzgerätes durchzuführen.

Dabei sollten bei positivem Ergebnis der Überprüfung hinsichtlich der automatischen Konfigurierbarkeit Informationen durch die Steuereinheit von der Steuerungsvorrichtung abgefragt werden, die eine eindeutige Identifikation der Arbeitsmaschine erlauben. Somit ist gewährleistet, dass es im Falle einer automatischen Konfiguration der Steuerungsvorrichtung der Arbeitsmaschine durch die Steuereinheit des Anbau- oder Vorsatzgerätes nicht zu einer ungewollten Übertragung von Daten kommen kann, was zu Fehleinstellungen beziehungsweise zu Fehlfunktionen führen kann.

Weiterhin kann die abgefragten Informationen zur Identifikation durch die Steuereinheit dahingehend ausgewertet werden, ob das angeschlossene Anbau- oder Vorsatzgerät zuvor bereits mit der Arbeitsmaschine verbunden gewesen ist. Auf diese Weise kann automatisch festgestellt werden, ob das Anbau- oder Vorsatzgerät in der Vergangenheit zumindest einmal mit der Arbeitsmaschine betrieben worden ist, das heißt die Arbeitsmaschine dem Anbau- oder Vorsatzgerät bekannt ist.

Insbesondere können bei positivem Ergebnis der Auswertung von der Steuereinheit in dieser hinterlegte Arbeitsdaten an die Steuerungsvorrichtung übertragen werden, anhand derer das Anbau- oder Vorsatzgerät automatisch kalibrierbar und eine Einstellung für den Betrieb des Anbau- oder Vorsatzgerätes durchführbar ist. Hierdurch wird ein optimaler Arbeitsbetrieb von Anbau- oder Vorsatzgerät und Arbeitsmaschine gewährleistet, da die für das Zusammenwirken des jeweiligen Anbau- oder Vorsatzgerätes und der Arbeitsmaschine vorsatzspezifischen Parameter automatisiert übertragen und eingestellt werden. Die Bedienperson kann in diesem Fall vollständig von der Konfiguration entlastet werden. Es werden automatisch Sollwerte für den Betrieb des Anbau- oder Vorsatzgerätes an der Steuerungsvorrichtung eingestellt. Zudem sinkt dadurch die Wahrscheinlichkeit von Fehleinstellungen und Fehlbedienungen.

Hingegen kann bei negativem Ergebnis der Auswertung von der Steuereinheit in dieser hinterlegte Basisarbeitsdaten an die Steuerungsvorrichtung übertragen werden, anhand derer das Anbau- oder Vorsatzgerät für eine Erstinbetriebnahme kalibrierbar und eine Grundeinstellung durchführbar ist. Die Übertragung von Basisarbeitsdaten für das Anbau- oder Vorsatzgerät bildet den Ausgangspunkt für den späteren Betrieb an der Arbeitsmaschine.

Weiterhin können nach einer manuellen Kalibrierung und Grundeinstellung des Anbau- oder Vorsatzgerätes durch die Steuerungsvorrichtung der Arbeitsmaschine diese Daten an die Steuereinheit übersandt und in dieser abgespeichert werden.

Darüber hinaus können nach einer manuellen Kalibrierung und Grundeinstellung des Anbau- oder Vorsatzgerätes Informationen zur Identifikation der Arbeitsmaschine von der Steuerungsvorrichtung an die Steuereinheit übertragen und von dieser abgespeichert werden. Auf diese Weise wird es bei einem erneuten Anschließen des Anbau- oder Vorsatzgerätes an die Arbeitsmaschine deren Erkennung durch die Steuereinheit ermöglicht, so dass auf die in der Steuereinheit hinterlegten Arbeitsdaten zur automatischen Konfiguration zurückgegriffen werden kann, dass heißt diese von der Steuereinheit an die Steuerungsvorrichtung der Erntemachine übertragen werden können.

Gemäß dem unabhängigen Anspruch 7 wird eine selbstfahrende Arbeitsmaschine zur Durchführung des Verfahrens vorgeschlagen, wobei bei einem Anschließen des Anbau- oder Vorsatzgerätes an die Arbeitsmaschine über ein Bussystem ein Datenaustausch zwischen einer Steuereinheit des Anbau- oder Vorsatzgerätes und der Steuerungsvorrichtung der Arbeitsmaschine initiierbar ist, und dass von der Steuereinheit anhand der von der Steuerungsvorrichtung empfangenen Daten überprüfbar ist, ob die Steuerungsvorrichtung durch die Steuereinheit automatisch konfigurierbar ist.

Vorzugsweise kann die die Steuereinheit zur Ansteuerung von Aktoren an dem Anbau- oder Vorsatzgerät ausgebildet sein. Dies kann durch eine Implementierung der Vorsatzgerätefunktionen, wie Haspelhöhensteuerung, Bodenkopierfunktion, Einstellfunktion der Länge eines mehrteiligen Schneidwerktisches oder dergleichen in die Steuereinheit erreicht werden. Analog gilt dies für Vorsatzgeräte wie Maisgebiss oder Maispflücker sowie an als Traktoren ausgebildete Arbeitsmaschinen, an die Anbaugeräte wie Spritzen, Sämaschinen, Schwader, Mähwerke, Frontlader und dergleichen mehr anschließbar sind.

In bevorzugter Weiterbildung kann die Steuereinheit mit an dem Anbau- oder Vorsatzgerät angeordneten Sensoren in Wirkverbindung stehen.

Insbesondere können Zuleitungen der Steuerungsvorrichtung der Arbeitsmaschine und der Steuereinheit des Anbau- oder Vorsatzgerätes durch Kopplungselemente verbindbar sein, welche neben stromführenden Zuleitungen zusätzlich eine Busschnittstelle zur Verbindung der Bussysteme der Arbeitsmaschine und des Anbau- oder Vorsatzgerätes aufweisen. Durch die Implementierung der Anbau- oder Vorsatzgerätefunktion in die Steuereinheit kann die Komplexität der Schnittstelle zwischen der Arbeitsmaschine und dem Anbau- oder Vorsatzgerät reduziert werden. Damit einhergehend wird die Zuverlässigkeit der Verbindung zwischen den Kopplungselementen erhöht. Ein weiterer Vorteil besteht darin, dass die Komplexität der Modulsoftware der Steuerungsvorrichtung der Arbeitsmaschine reduziert wird, da auf anbaugerätespezifische odervorsatzgerätespezifische Softwaremodule für die Steuerungsvorrichtung ganz oder zumindest teilweise verzichtet werden kann.

Die vorliegende Erfindung wird nachstehend anhand eines in den Zeichnungen dargestellten Ausführungsbeispiels näher erläutert.

Es zeigen:
- Fig. 1: eine schematische Seitenansicht eines Mähdreschers;
- Fig. 2: einen vergrößerten Ausschnitt eines Schneidwerks des Mähdreschers;
- Fig. 3: ein Flussdiagramm zur Veranschaulichung des Verfahrens;

Die vorliegende Erfindung wird exemplarisch am Beispiel eines Mähdreschers als landwirtschaftliche Arbeitsmaschine und einem daran angeschlossenen Schneidwerk als Vorsatzgerät beschrieben. Als landwirtschaftliche Arbeitsmaschine kann beispielsweise auch ein Feldhäcksler oder ein Traktor zum Einsatz kommen. Bei dem Vorsatzgerät können neben den unterschiedlichen Schneidwerksvarianten auch ein Maispflücker, eine Pickup oder ein Maisgebiss Verwendung finden. Als Anbaugerät sind Schwader, Wender, Mähwerke, Spritzen oder dergleichen zu nennen.

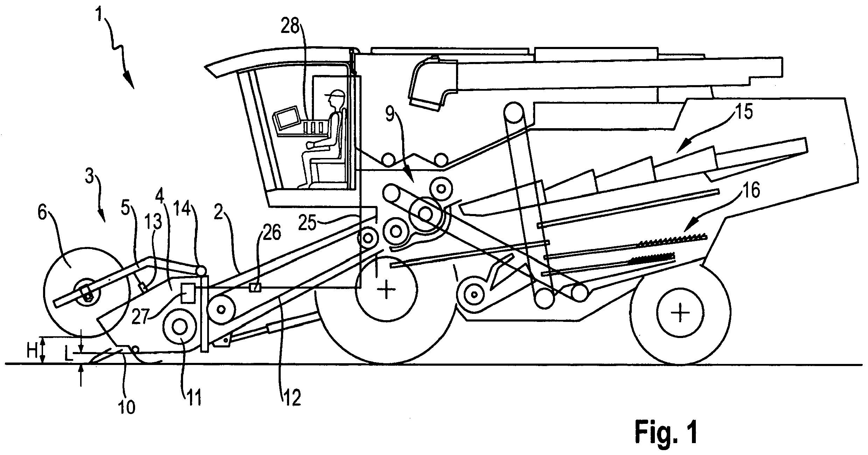

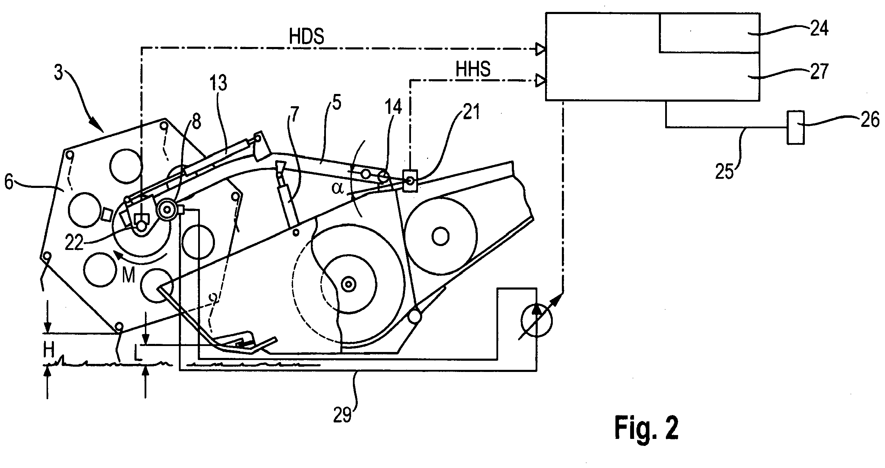

In der Fig. 1 ist ein Mähdrescher 1 in der Seitenansicht dargestellt, an dessen vertikal schwenkbarem Einzugsschacht 2 ein als Schneidwerk 3 ausgeführtes Vorsatzgerät angeordnet ist. Mit dem schwenkbaren Einzugsschacht 2 ist das Schneidwerk 3 auf eine gewünschte Schnitthöhe L einstellbar. Das Schneidwerk 3 besteht aus einem Schneidtisch 4, und aus einer an zwei höhenverschwenkbaren Haspeltragarmen 5 an dem Schneidtisch 4 befestigten Haspel 6. Zwischen dem Schneidtisch 4 und den Haspeltragarmen 5 sind zwei Hydraulikzylinder 7 angelenkt, mit denen die Haspeltragarme 5 um einen Gelenkpunkt 14 drehend, verschwenkt werden und dabei die Höhenlage der Haspel 6 ändern. Zusätzlich sind zwischen den Haspeltragarmen 5 und der Haspel 6 zwei weitere Hydraulikzylinder 13 angebracht, mit denen die Lage der Haspel in horizontaler Richtung in Relation zum Schneidtisch 4 eingestellt wird, wie in Fig. 2 dargestellt ist.

Die mit einem als Hydraulikmotor 8 ausgeführten Motor rotierend angetriebene Haspel 6 sorgt für eine kontinuierliche Annahme des Erntegutes sowie für dessen gleichmäßige Förderung durch das Schneidwerk 3 und den Einzugsschacht 2 zu einer an sich bekannten und daher hier nicht näher erläuterten Drescheinrichtung 9 des Mähdreschers 1. Das Erntegut wird mit einem an der vorderen Kante des Schneidtisches 4 angebrachten Messerbalken 10 abgeschnitten und das abgeschnittene Erntegut anschließend mit Hilfe der Haspel 6 zu einer im Schneidtisch 4 angeordneten, rotierend angetriebenen Einzugsschnecke 11 gefördert. Die Einzugsschnecke 11 führt das Erntegut dem Einzugsschacht 2 zu. In dem Einzugsschacht 2 läuft ein Schrägförderer 12, der das Erntegut zur Drescheinrichtung 9 weiterfördert. Der Drescheinrichtung 9 nachgeordnet ist eine Abscheidevorrichtung 15, hier in Gestalt eines Hordenschüttlers, angeordnet. Alternativ kann die Abscheidevorrichtung 15 auch als Abscheiderotor ausgeführt sein. Das von der Drescheinrichtung 9 sowie der Abscheidevorrichtung 15 abgegebene Erntegut wird einer Reinigungsvorrichtung 16 zugeführt. Die Steuerung der Arbeitsaggregate des Mähdreschers 1 erfolgt durch eine Steuerungsvorrichtung 28, die über ein Bussystem 25 mit den Arbeitsaggregaten kommuniziert, um diese zu steuern oder zu regeln. Die Steuerungsvorrichtung 28 umfasst eine Anzeige-, eine Datenverarbeitungs- sowie eine Eingabevorrichtung. Weiterhin ist durch Kopplungselemente 26 eine am Schneidwerk 3 angeordnete Steuereinheit 27 an das Bussystem 25 angeschlossen.

Zur optimalen Aufnahme des Ernteguts ist das Schneidwerk 3 beweglich ausgeführt, indem das Schneidwerk 3 in seiner Höhe wie auch in seiner Querneigung geführt wird. Die vertikale Höhenverstellung, das heißt der Längsneigungsausgleich in Fahrtrichtung wie auch die Veränderung der Querneigung des Schneidwerkes 3, erfolgt in Abhängigkeit von dem aktuellen Bodenniveau und dient damit einer gleichmäßigen Stoppelhöhe des abgeernteten Ernteguts.

Fig. 2 zeigt einen Ausschnitt des Schneidwerks 3 des Mähdreschers 1 gemäß Fig. 1 einschließlich der dort angeordneten Sensoren 21, 22 sowie die mit einem Datenspeicher 24 und einem Mikroprozessor ausgestattete Steuereinheit 27, die der Steuerung des Schneidwerkes 3 dient. Die momentane Haspelhöhe H der Haspel 6 wird mit einem im Gelenkpunkt 14 angebrachten Drehwinkelsensor 21 gemessen, der einen Drehwinkel α der Haspeltragarme 5 misst. Ein von dem Drehwinkelsensor 21 erzeugtes Signal HHS ist direkt proportional zur Haspelhöhe H.

Der Hydraulikmotor 8 wird von einem hydraulischen Antriebsystem 29 angetrieben. In dem hydraulischen Antriebsystem 29 ist ein Drucksensor 22 installiert, mit dem ein hydraulischer Druck sensiert wird, der sich abhängig vom Haspeldrehmoment M ändert. Ein von dem Drucksensor 22 erzeugtes Signal HDS ist proportional zu einer an der Haspel 6 wirkenden Belastung. Die Belastung der Haspel 6 wird durch die Ermittlung der auf die Haspel 6 wirkenden Zugkraft FH bestimmt, die durch das Haspeldrehmoment M definiert ist. Die Signale HHS und HDS werden der mit dem Drehwinkelsensor 21 und dem Drucksensor 22 verbundenen Steuereinheit 27 zugeführt, die das hydraulische Antriebssystem 29 steuert.

Weiterhin kann vorgesehen sein, dass ein Schneidwerk eine Schneidwerksmulde aufweist, die aus einem feststehenden Teil und einem beweglichen Teil besteht, um die Länge des Schneidtisches bei der Verarbeitung verschiedener Erntegutarten variieren zu können. Mit der Veränderung der Lage des beweglichen Muldenteiles der Schneidwerksmulde gegenüber dem starren Muldenteil muss sichergestellt werden, dass die Haspel bei jeder möglichen Relativstellung des Messerbalkens mit letzterem nicht kollidieren kann. Hierzu wird die Relativlage des beweglichen Muldenteiles zum feststehenden fortlaufend ermittelt und die zwecks Einhaltung eines Mindestabstandes der Haspel zum Messerbalken erforderliche Mindesthöhenlage der Haspel entsprechend der jeweiligen Relativstellung durch Beeinflussung von Elektromagnetventilen geregelt. Auf einfache Art und Weise ist dabei mit der Seitenwand des beweglichen Muldenteiles eine Steuerkurve verbunden, mit der ein an der Haspel befestigter Sensor zusammenwirkt, wobei der Sensor auf die Elektromagnetventile der Kolbenzylindereinheit einwirkt, die zum Anheben und Absenken der Haspel vorgesehen sind. Die Steuerung des beweglichen Muldenteiles wie auch der Haspel erfolgt dabei ebenfalls durch die Steuereinheit am Schneidwerk.

Für den ordnungsgemäßen Betrieb der zuvor genannten Funktionen ist es grundsätzlich erforderlich, eine Kalibrierung der Sensoren 21, 22 durchzuführen sowie eine Neueingabe der Konfiguration vorzunehmen, wenn das Vorsatzgerät ausgewechselt wird. Um die Bedienperson von dieser zeitintensiven Aufgabe zu entlasten, wird ein Verfahren zum Betreiben einer landwirtschaftlichen Arbeitsmaschine, hier des Mähdreschers 1 vorgeschlagen, gemäß dem bei einem Anschließen des Schneidwerkes 3 an den Mähdrescher 1 über ein Bussystem 25 ein Datenaustausch zwischen der Steuereinheit 27 des Schneidwerkes 3 und der Steuerungsvorrichtung 28 des Mähdreschers 1 initiiert wird. Dabei wird von der Steuereinheit 27 anhand der von der Steuerungsvorrichtung 28 empfangenen Daten geprüft, ob das angeschlossene Vorsatzgerät durch die Steuerungsvorrichtung 28 automatisch konfigurierbar ist.

Die Verbindung zwischen dem Schneidwerk 3 beziehungsweise einem Vorsatzgerät und dem Mähdrescher 3 respektive einer landwirtschaftlichen Arbeitsmaschine erfolgt durch steckerartige Kopplungselemente 26, die neben stromführenden Leitungen auch eine Busschnittstelle umfassen. Als Bussysteme 25 für das Vorsatzgerät 3 und die Arbeitsmaschine 1 kommen beispielsweise CAN, LIN, Flexray, Ethernet oder dergleichen zur Anwendung.

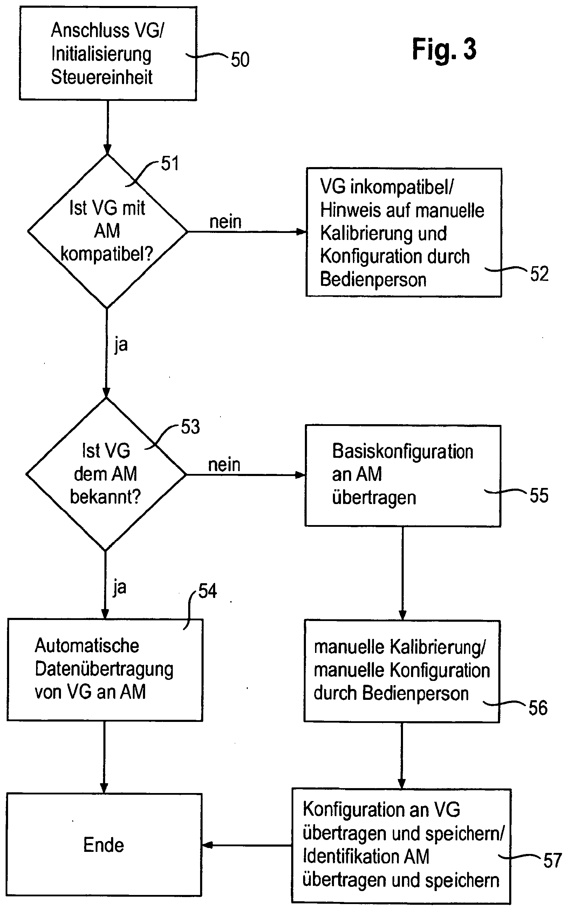

Fig.3 zeigt ein Flussdiagramm, anhand dessen das Verfahren zum Betreiben einer landwirtschaftlichen Arbeitsmaschine, an die ein Vorsatzgerät anschließbar ist, im vorliegenden Ausführungsbeispiel anhand des im Ausführungsbeispieles genannten Mähdreschers 1, erläutert wird. Den Ausgangspunkt des Verfahrens bildet der Anschluss eines Vorsatzgerätes, hier des Schneidwerkes 3, an die als Mähdrescher 1 ausgeführte Arbeitsmaschine. Die Dauer des Vorganges der Aus- oder Umrüstung lässt sich reduzieren, wenn bestehende Daten einer Kalibrierung sowie einer Konfiguration an die Steuerungsvorrichtung 28 des Mähdreschers 1 übertragbar sind.

In einem ersten Schritt 50 wird durch das Verbinden der Bussysteme 25 des Schneidwerkes 3 mit dem Bussystem 25 des Mähdreschers 1 die Steuereinheit 27 des Schneidwerkes 3 initialisiert. Das heißt, die physische Kopplung des Vorsatzgerätes an das Bussystem 25 des Mähdreschers 1 und damit einhergehend an dessen Stromversorgung lösen die Durchführung des Verfahrens durch die Steuereinheit 27 aus. Die Steuereinheit des Schneidwerkes 3 und der Mähdrescher 1 treten über das Bussystem 25 in einen Datenaustausch.

In einer ersten Abfrage 51 wird überprüft, ob das Schneidwerk 3 und der Mähdrescher 1 kompatibel sind, das heißt, ob die Steuerungsvorrichtung 28 des Mähdreschers 1 automatisch durch die Steuereinheit 27 des Schneidwerkes 3 konfigurierbar ist. Es wird geprüft, ob in der Steuereinheit 27 hinterlegte Daten, wie Gerätetyp, Seriennummer, Betriebsstunden, Wartungszähler, Arbeitsbreite und Gewicht des Vorsatzgerätes, die hydraulische Konfiguration, gespeicherte Sollwerte für die Bodenführung des Schneidwerkes 3, die Haspel 6, den Schneidtisch 4, Abstände der Tastbügel, und dergleichen, über das Bussystem 25 an die Steuerungsvorrichtung 28 übertragbar und in dieser hinterlegbar sind.

Wird in der ersten Abfrage 51 festgestellt, dass eine diesbezügliche Kompatibilität zwischen dem Schneidwerk 3 und dem Mähdrescher 1 gegeben ist, wird in einer nachfolgenden zweiten Abfrage 53 überprüft, ob das Schneidwerk 3 bereits einmal an den Mähdrescher 1 angeschlossen worden ist. Diese Überprüfung erfolgt durch eine Abfrage einer Information von der Steuereinheit 27, welche eine eindeutige Identifikation des Mähdreschers 1 ermöglicht.

Ist das Ergebnis dieser zweiten Abfrage 53 ebenfalls positiv, wird in einem zweiten Schritt 54 der Datenaustausch zwischen der Steuereinheit 27 und der Steuerungsvorrichtung 28 erneut aufgenommen und die für den identifizierten Mähdrescher 1 hinterlegten Daten zur Kalibrierung und Konfiguration über das Bussystem 25 an dessen Steuerungsvorrichtung 28 übertragen. Mit der erfolgreichen Übertragung der Daten von der Steuereinheit 27 an die Steuerungsvorrichtung 28 endet das Verfahren.

Wird während der ersten Abfrage 51 eine Inkompatibilität von Schneidwerk 3 und Mähdrescher 1 festgestellt, das heißt, dass die Steuerungsvorrichtung 28 des Mähdreschers 1 durch die Steuereinheit 27 des Schneidwerkes 3 nicht automatisch konfigurierbar ist, wird gemäß Verfahrensschritt 52 ein entsprechender Hinweis an die Bedienperson auf einer Anzeige- und Eingabeeinheit der Steuerungsvorrichtung 28 des Mähdreschers 1 ausgegeben. Die Bedienperson hat daraufhin die notwendige Kalibrierung des Schneidwerkes 3 sowie die Konfiguration der Steuerungsvorrichtung 28 des Mähdreschers 1 selbsttätig vorzunehmen.

In dem Fall, dass gemäß der ersten Abfrage 51 eine Kompatibilität zwischen dem Schneidwerk 3 und dem Mähdrescher 1 besteht, das Schneidwerk 3 jedoch erstmalig an den Mähdrescher 1 angeschlossen wird, führt die zweite Abfrage 53 zu einem negativen Ergebnis. Um dennoch den Vorgang der Aus- der Umrüstung beschleunigen zu können, ist gemäß einem ersten Zwischenschritt 55 vorgesehen, das von der Steuereinheit 27 eine in deren Speicher hinterlegte Basiskonfiguration, die Informationen beispielsweise über den Gerätetyp, die Breite, das Gewicht, geleistete Betriebsstunden und dergleichen des angeschlossenen Vorsatzgerätes enthalten, automatisch an die Steuerungsvorrichtung 28 übertragen.

An den ersten Zwischenschritt 55 schließt sich ein zweiter Zwischenschrift 56 an, gemäß dem die für die Inbetriebnahme erforderliche Kalibrierung des Schneidwerkes 3 manuell durch die Bedienperson durchgeführt wird. Dieser zweite Zwischenschritt 56 ließe sich auch automatisieren, indem in der Steuerungsvorrichtung 28 ein Algorithmus hinterlegt wird, der in Abhängigkeit von dem angeschlossenen Vorsatzgerät die für eine Kalibrierung notwendigen Schritte automatisiert durchführt.

Nachdem die Kalibrierung und gegebenenfalls die Konfiguration abgeschlossen worden ist, wird die in der Steuerungsvorrichtung 28 für das angeschlossene Schneidwerk 3 hinterlegte Konfiguration einschließlich der Kalibrierwerte an die Steuereinheit 27 übertragen. Diese Daten werden gemeinsam mit einer Information zur eindeutigen Identifikation der Arbeitsmaschine, dem Mähdrescher 1, verknüpft und in der Steuereinheit 27 des Vorsatzgerätes, hier des Schneidwerkes 3, abgespeichert. Dies wird in einem dritten Schritt 57 durchgeführt, der manuell durch die Bedienperson auslösbar ist oder der automatisch ausgeführt wird, nachdem die Bedienperson beispielsweise den Vorgang der Kalibrierung und Konfiguration des erstmalig angeschlossen Vorsatzgerätes durch eine entsprechende Quittierung einer Abfrage durch die Steuerungsvorrichtung 28 bestätigt hat.

**Bezugszeichenliste**

| | | | |
|---|---|---|---|
| **1** | Mähdrescher | **H** | Haspelhöhe |
| **2** | Einzugsschacht | **L** | Schnitthöhe |
| **3** | Schneidwerk | **M** | Haspeldrehmoment |
| **4** | Schneidtisch | **HDS** | Signal |
| **5** | Haspeltragarm | **HHS** | Signal |
| **6** | Haspel | | |
| **7** | Hydraulikzylinder | | |
| **8** | Hydraulikmotor | | |
| **9** | Drescheinrichtung | | |
| **10** | Messerbalken | | |
| **11** | Einzugsschnecke | | |
| **12** | Schrägförderer | | |
| **13** | Hydraulikzylinder | | |
| **14** | Gelenkpunkt | | |
| **15** | Hordenschüttler | | |
| **16** | Reinigung | | |
| **21** | Drehwinkelsensor | | |
| **22** | Drucksensor | | |
| **24** | Datenspeicher | | |
| **25** | Bussystem | | |
| **26** | Kopplungselement | | |
| **27** | Steuereinheit | | |
| **28** | Steuerungsvorrichtung | | |
| **50** | Erster Schritt | | |
| **51** | Erste Abfrage | | |
| **52** | Verfahrensschritt | | |
| **53** | Zweite Abfrage | | |
| **54** | Zweiter Schritt | | |
| **55** | erster Zwischenschritt | | |
| **56** | zweiter Zwischenschritt | | |
| **57** | Dritter Schritt | | |

## Patentansprüche

1. Verfahren zum Betreiben einer landwirtschaftlichen Arbeitsmaschine (1), an die ein Anbau- oder Vorsatzgerät (3) angeschlossen wird, welches durch eine der Arbeitsmaschine (1) zugeordnete Steuerungsvorrichtung (28) gesteuert wird,
**dadurch gekennzeichnet, dass**
bei einem Anschließen des Anbau- oder Vorsatzgerätes (3) an die Arbeitsmaschine (1) über ein Bussystem (25) ein Datenaustausch zwischen einer Steuereinheit (27) des Anbau- oder Vorsatzgerätes (3) und der Steuerungsvorrichtung (28) der Arbeitsmaschine (1) initiiert wird, dass von der Steuereinheit (27) anhand der von der Steuerungsvorrichtung (28) empfangenen Daten geprüft wird, ob die Steuerungsvorrichtung (28) durch die Steuereinheit (27) automatisch konfigurierbar ist, und dass gerätespezifische Parameter und hinterlegte Sollwerte automatisch eingestellt werden, wenn festgestellt wird, dass die Steuerungsvorrichtung (28) automatisch konfigurierbar ist und dass bei positivem Ergebnis der Überprüfung Informationen durch die Steuereinheit (27) von der Steuerungsvorrichtung (28) abgefragt werden, die eine eindeutige Identifikation der Arbeitsmaschine (1) erlauben.

2. Verfahren nach Anspruch 1, **dadurch gekennzeichnet, dass** die abgefragten Informationen zur Identifikation durch die Steuereinheit (27) dahingehend ausgewertet werden, ob das angeschlossene Anbau- oder Vorsatzgerät (3) zuvor bereits mit der Arbeitsmaschine (1) verbunden gewesen ist.

3. Verfahren nach Anspruch 2, **dadurch gekennzeichnet, dass** bei positivem Ergebnis der Auswertung von der Steuereinheit (27) in dieser hinterlegte Arbeitsdaten an die Steuerungsvorrichtung (28) übertragen werden, anhand derer das Anbau- oder Vorsatzgerät (3) automatisch kalibrierbar und eine Einstellung durchführbar ist.

4. Verfahren nach Anspruch 2, **dadurch gekennzeichnet, dass** bei negativem Ergebnis der Auswertung von der Steuereinheit (27) in dieser hinterlegte Basisarbeitsdaten an die Steuerungsvorrichtung (28) übertragen werden, anhand derer das Anbau- oder Vorsatzgerät (3) für eine Erstinbetriebnahme kalibrierbar und eine Grundeinstellung durchführbar ist.

5. Verfahren nach Anspruch 1, **dadurch gekennzeichnet, dass** nach einer manuellen Kalibrierung und Grundeinstellung des Anbau- oder Vorsatzgerätes (3) durch die Steuerungsvorrichtung (28) der Arbeitsmaschine (1) diese Daten an die Steuereinheit (27) übersandt und in dieser abgespeichert werden.

6. Verfahren nach Anspruch 5, **dadurch gekennzeichnet, dass** nach einer manuellen Kalibrierung und Grundeinstellung des Anbau- oder Vorsatzgerätes (3) Informationen zur Identifikation der Arbeitsmaschine (1) von der Steuerungsvorrichtung (28) an die Steuereinheit (27) übertragen und von dieser abgespeichert werden.

7. Landwirtschaftliche Arbeitsmaschine (1), an die ein Anbau- oder Vorsatzgerät (3) anschließbar ist, welches durch eine der Arbeitsmaschine (1) zugeordnete Steuerungsvorrichtung (28) steuerbar ist, eingerichtet zur Durchführung des Verfahrens gemäß einem der Ansprüche 1 bis 6, **dadurch gekennzeichnet, dass** bei einem Anschließen des Anbau- oder Vorsatzgerätes (3) an die Arbeitsmaschine (1) über ein Bussystem (25) ein Datenaustausch zwischen einer Steuereinheit (27) des Anbau- oder Vorsatzgerätes (3) und der Steuerungsvorrichtung (28) der Arbeitsmaschine (1) initiierbar ist, dass durch die Steuereinheit (27) anhand der von der Steuerungsvorrichtung (28) empfangenen Daten überprüfbar ist, ob die Steuerungsvorrichtung (28) durch die Steuereinheit (27) automatisch konfigurierbar ist, und dass gerätespezifische Parameter und hinterlegte Sollwerte automatisch eingestellt werden, wenn festgestellt wird, dass die Steuerungsvorrichtung (28) automatisch konfigurierbar ist.

8. Arbeitsmaschine (1) nach Anspruch 7, **dadurch gekennzeichnet, dass** die Steuereinheit (27) zur Ansteuerung von Aktoren (7, 8, 13) an dem Anbau- oder Vorsatzgerät (3) ausgebildet ist.

9. Arbeitsmaschine (1) nach einem der Ansprüche 7 oder 8, **dadurch gekennzeichnet, dass** die Steuereinheit (27) mit an dem Anbau- oder Vorsatzgerät (3) angeordneten Sensoren (21, 22) in Wirkverbindung steht.

10. Arbeitsmaschine (1) nach einem der Ansprüche 7 bis 9, **dadurch gekennzeichnet, dass** Zuleitungen der Steuerungsvorrichtung (28) der Arbeitsmaschine (1) und der Steuereinheit (27) des Anbau- oder Vorsatzgerätes (3) durch Kopplungselemente (26) verbindbar sind, welche neben stromführenden Zuleitungen zusätzlich eine Busschnittstelle zur Verbindung der Bussysteme (25) der Arbeitsmaschine (1) und des Anbau- oder Vorsatzgerätes (3) aufweisen.

11. Arbeitsmaschine (1) nach einem der Ansprüche 7 bis 10, **dadurch gekennzeichnet, dass** die Arbeitsmaschine als Mähdrescher, Feldhäcksler oder Traktor ausgebildet ist.

12. Arbeitsmaschine (1) nach einem der Ansprüche 7 bis 11, **dadurch gekennzeichnet, dass** das an die Arbeitsmaschine anschließbare Vorsatzgerät als Schneidwerk, Maispflücker, Pickup oder Maisgebiss ausgeführt ist.

13. Arbeitsmaschine (1) nach einem der Ansprüche 7 bis 11, **dadurch gekennzeichnet, dass** das an die Arbeitsmaschine anschließbare Anbaugerät als Schwader, Wender, Mähwerk oder Frontlader ausgeführt ist.

## Claims

1. A method of operating an agricultural working machine (1) to which an attachment or front-mounted implement (3) is connected, which is controlled by a control apparatus (28) associated with the working machine (1), **characterised in that** when the attachment or front-mounted implement (3) is connected to the working machine (1) data exchange is initiated by way of a bus system (25) between a control unit (27) of the attachment or front-mounted implement (3) and the control apparatus (28) of the working machine (1), that on the basis of the data received from the control apparatus (28) the control unit (27) checks whether the control apparatus (28) can be automatically configured by the control unit (27), that device-specific parameters and stored reference values are automatically set when it is established that the control apparatus (28) can be automatically configured and upon a positive result of the checking operation items of information are requested by the control unit (27) from the control apparatus (28), which allow unique identification of the working machine (1).

2. A method according to claim 1 **characterised in that** the requested items of information for identification purposes are evaluated by the control unit (27) to determine whether the connected attachment or front-mounted implement (3) has previously already been connected to the working machine (1).

3. A method according to claim 2 **characterised in that** upon a positive result of the evaluation operation by the control unit (27) working data stored in same are transmitted to the control apparatus (28), on the basis of which the attachment or front-mounted implement (3) can be automatically calibrated and an adjustment can be carried out.

4. A method according to claim 2 **characterised in that** upon a negative result of the evaluation operation by the control unit (27) base working data stored in same are transmitted to the control apparatus (28), on the basis of which the attachment or front-mounted implement (3) can be calibrated for first bringing it into operation and a basic adjustment can be carried out.

5. A method according to claim 1 **characterised in that** after manual calibration and basic adjustment of the attachment or front-mounted implement (3) by the control apparatus (28) of the working machine (1) said data are sent to and stored in the control unit (27).

6. A method according to claim 5 **characterised in that** after manual calibration and basic adjustment of the attachment or front-mounted implement (3) items of information for identification of the working machine (1) are transmitted from the control apparatus (28) to the control unit (27) and stored by same.

7. An agricultural working machine (1) to which an attachment or front-mounted implement (3) can be connected, which is controllable by a control apparatus (28) associated with the working machine (1), for carrying out the method according to one of claims 1 to 6, **characterised in that** when the attachment or front-mounted implement (3) is connected to the working machine (1) data exchange is initiated by way of a bus system (25) between a control unit (27) of the attachment or front-mounted implement (3) and the control apparatus (28) of the working machine (1), that on the basis of the data received from the control apparatus (28) the control unit (27) can check whether the control apparatus (28) can be automatically configured by the control unit (27), and that device-specific parameters and stored reference values are automatically set when it is established that the control apparatus (28) can be automatically configured.

8. A working machine (1) according to claim 7 **characterised in that** the control unit (27) is adapted to actuate actuators (7, 8, 13) on the attachment or front-mounted implement (3).

9. A working machine (1) according to one of claims 7 and 8 **characterised in that** the control unit (27) is operatively connected to sensors (21, 22) arranged at the attachment or front-mounted implement (3).

10. A working machine (1) according to one of claims 7 to 9 **characterised in that** feed lines of the control apparatus (28) of the working machine (1) and the control unit (27) of the attachment or front-mounted implement (3) can be connected by coupling elements (26), which besides current-carrying feed lines additionally have a bus interface for connection of the bus systems (25) of the working machine (1) and of the attachment or front-mounted implement (3).

11. A working machine (1) according to one of claims 7 to 10 **characterised in that** the working machine is in the form of a combine harvester, forage harvester or tractor.

12. A working machine (1) according to one of claims 7 to 11 **characterised in that** the front-mounted implement which can be connected to the working machine is in the form of a cutting header, a corn picker, a pick-up or a corn header.

13. A working machine (1) according to one of claims 7 to 11 **characterised in that** the attachment implement which can be connected to the working machine is in the form of a swather, turning implement, mowing mechanism or front loader.

## Revendications

1. Procédé pour exploiter un engin agricole (1) auquel est relié un outil rapporté ou frontal (3), lequel est commandé par l'intermédiaire d'un dispositif de commande (28) associé à l'engin (1), **caractérisé en ce que**, lors d'une liaison de l'outil rapporté ou frontal (3) avec l'engin (1), un échange de données entre une unité de commande (27) de l'outil rapporté ou frontal (3) et le dispositif de commande (28) de l'engin (1) est lancé par l'intermédiaire d'un système de bus (25), **en ce que** l'unité de commande (27) contrôle à l'aide des données reçues par le dispositif de commande (28) si le dispositif de commande (28) est configurable automatiquement par l'intermédiaire de l'unité de commande (27), et **en ce que** des paramètres spécifiques à l'outil et des valeurs de consigne enregistrées sont adoptés automatiquement s'il est constaté que le dispositif de commande (28) est configurable automatiquement, et **en ce qu'**en cas de résultat positif du contrôle, des informations sont demandées par l'unité de commande (27) au dispositif de commande (28), lesquelles permettent une identification univoque de l'engin (1).

2. Procédé selon la revendication 1, **caractérisé en ce que** les informations demandées aux fins d'identification sont analysées par l'unité de commande (27) pour savoir si l'outil rapporté ou frontal (3) relié a déjà été connecté à l'engin (1).

3. Procédé selon la revendication 2, **caractérisé en ce que**, en cas de résultat positif de l'analyse, des données de travail stockées dans l'unité de commande (27) sont transmises au dispositif de commande (28) et permettent de paramétrer automatiquement l'outil rapporté ou frontal (3) et de réaliser un réglage.

4. Procédé selon la revendication 2, **caractérisé en ce que**, en cas de résultat négatif de l'analyse, des données de travail de base stockées dans l'unité de commande (27) sont transmises par celle-ci au dispositif de commande (28) et permettent de paramétrer l'outil rapporté ou frontal (3) pour une mise en service initiale et de réaliser un réglage de base.

5. Procédé selon la revendication 1, **caractérisé en ce que**, après un paramétrage et un réglage de base manuels de l'outil rapporté ou frontal (3), ces données sont transmises par le dispositif de commande (28) de l'engin (1) à l'unité de commande (27) et y sont mémorisées.

6. Procédé selon la revendication 5, **caractérisé en ce que**, après un paramétrage et un réglage de base manuels de l'outil rapporté ou frontal (3), des informations pour l'identification de l'engin (1) sont transmises par le dispositif de commande (28) à l'unité de commande (27) et sont mémorisées par celle-ci.

7. Engin agricole (1) auquel peut être relié un outil rapporté ou frontal (3), lequel peut être commandé par l'intermédiaire d'un dispositif de commande (28) associé à l'engin (1), agencé pour réaliser le procédé selon une des revendications 1 à 6, **caractérisé en ce que**, lors d'une liaison de l'outil rapporté ou frontal (3) avec l'engin (1), un échange de données entre une unité de commande (27) de l'outil rapporté ou frontal (3) et le dispositif de commande (28) de l'engin (1) peut être lancé par l'intermédiaire d'un système de bus (25), et **en ce que** l'unité de commande (27) peut contrôler à l'aide des données reçues du dispositif de commande (28) si le dispositif de commande (28) est configurable automatiquement par l'intermédiaire de l'unité de commande (27), et **en ce que** des paramètres spécifiques à l'outil et des valeurs de consigne enregistrées sont adoptés automatiquement s'il est constaté que le dispositif de commande (28) est configurable automatiquement.

8. Engin (1) selon la revendication 7, **caractérisé en ce que** l'unité de commande (27) est conçue pour commander des actionneurs (7, 8, 13) disposés sur l'outil rapporté ou frontal (3).

9. Engin (1) selon une des revendications 7 ou 8, **caractérisé en ce que** l'unité de commande (27) est en liaison active avec des capteurs (21, 22) disposés sur l'outil rapporté ou frontal (3).

10. Engin (1) selon une des revendications 7 à 9, **caractérisé en ce que** des lignes d'alimentation du dispositif de commande (28) de l'engin (1) et de l'unité de commande (27) de l'outil rapporté ou frontal (3) peuvent être reliées par l'intermédiaire d'éléments d'accouplement (26), lesquels comportent, en plus de lignes d'alimentation parcourues par du courant, une interface de bus pour relier les systèmes de bus (25) de l'engin (1) et de l'outil rapporté ou frontal (3).

11. Engin (1) selon une des revendications 7 à 10, **caractérisé en ce que** l'engin est conformé en moissonneuse-batteuse, en ensileuse ou en tracteur.

12. Engin (1) selon une des revendications 7 à 11, **caractérisé en ce que** l'outil frontal pouvant être relié à l'engin est conformé en tablier de coupe, en cueilleur à maïs, en pick-up ou en bec maïs.

13. Engin (1) selon une des revendications 7 à 11, **caractérisé en ce que** l'outil rapporté pouvant être relié à l'engin est conformé en andaineur, en faneuse, en tête de fauchage ou en chargeur frontal.
